# EUROPEAN PATENT APPLICATION

(11) **EP 4 570 542 A1**
(43) Date of publication of application: **18.06.2025**
(21) Application number: 24218183.2
(22) Date of filing: 06.12.2024
(51) Int. Cl.: B60J 1/00

(54) **WINDOW STRUCTURE OF A VEHICLE**

(30) Priority: 15.12.2023 JP 2023211833
(71) Applicant: MAZDA MOTOR CORPORATION, Hiroshima 730-8670 (JP)
(72) Inventor: Miyoshi, Yuji, Aki-gun, Hiroshima, 730-8670 (JP); Asakawa, Motoyasu, Aki-gun, Hiroshima, 730-8670 (JP); Nagatomo, Hiroyuki, Aki-gun, Hiroshima, 730-8670 (JP); Nakagawa, Kohya, Aki-gun, Hiroshima, 730-8670 (JP); Yamamoto, Kenichi, Aki-gun, Hiroshima, 730-8670 (JP)
(74) Representative: Herrmann, Uwe

(57) **Abstract**

The present invention relates to a window structure of a vehicle.

A second adhesive (5) having a greater loss coefficient than a first adhesive (4) adheres a window member (3) to a window frame member (2) at a pair of first portions (C) which include respective lower corner portions (C) of a peripheral edge portion (2b) of the window frame member (2) and/or a second portion (D) which is positioned between the pair of first portions (C). The first adhesive (4) adheres the window member (3) to the window frame member (2) at a portion (A, B, E) except the above-described portions (C, D) where the window member (3) is adhered to the window frame member (2) by the second adhesive (5).

## Description

### BACKGROUND OF THE INVENTION

The present invention relates to a window structure of a vehicle.

Conventionally, there may occur the membrane (film) vibration of a windshield of the vehicle which is caused by the vehicle traveling's vibrations transmitted to the windshield from a vehicle lower part. This membrane (film) vibration of the windshield possibly generates improper noises or vibrations which may cause deterioration of the comfortability of a passenger in a cabin. Therefore, in recent years, various technologies have been proposed in order to reduce the membrane (film) vibration of the windshield from an improvement perspective of the comfortability.

In a structure disclosed in JP 2009-012604 A, two lines of adhesive portions to adhere a windshield to a frame body are applied to a lower-side part of a windshield provided at a vehicle front side such that they extend in a vehicle width direction side by side. The two-line adhesive portions so increase the rigidity of the lower-side part of the windshield compared to another part of the windshield that the windshield' membrane (film) vibration generated in a certain frequency range in the vehicle traveling can be suppressed from occurring. Thereby, the NVH performance (regarding noises, vibrations, harshness) of the vehicle can be improved.

In the above-described structure, however, by changing a resonant frequency of the windshield in a particular frequency range of the vibrations which the windshield receives by means of the increased rigidity of the lower part of the windshield, the vibration level of the particular frequency range is decreased. Therefore, since another resonance may occur in a different frequency range when the frequency of the inputted vibration changes from the above-described particular frequency, there is a concern that the effects of reducing the vibrations may not be obtained properly.

Meanwhile, a technology that an adhesive to improve the vibration characteristics is replaced by a material having the superior vibration-reduction performance is known. However, since this material is generally rather expensive compared to the normal adhesive for the windshield, the above-described technology has a problem in costs as well.

### SUMMARY OF THE INVENTION

The present invention has been devised in view of the above-described matters, and an object of the present invention is to provide a window structure of a vehicle which can properly suppress the vibration of the window member, preventing the costs from increasing excessively.

The window structure of the vehicle of the present invention comprises a window frame member having an opening portion penetrating in a vehicle longitudinal direction and a peripheral edge portion enclosing the opening portion and provided at a front part of the vehicle, a window member covering the opening portion and piled on the peripheral edge portion of the window frame member, the window member being transparent or translucent, and an adhesive applied to the peripheral edge portion of the window frame member along an entire circumference of the peripheral edge portion so as to adhere the window member to the peripheral edge portion of the window frame member, wherein the peripheral edge portion of the window frame member comprises a pair of first portions which include a right-and-left corner portions positioned at a lower side of the peripheral edge portion and at both sides, in a vehicle width direction, thereof and respective portions continuous to the pair of corner portions, and a second portion which is positioned between the pair of first portions, the adhesive comprises a first adhesive and a second adhesive having a greater loss coefficient than the first adhesive, the second adhesive is provided to adhere the window member to the window frame member at the pair of first portions and/or the second portion, and the first adhesive is provided to adhere the window member to the window frame member at a portion except the portion where the window member is adhered to the window frame member by the second adhesive.

The present invention can obtain the superior vibration-reduction effects without any improperly-excessive costs increase.

That is, according to the above-described structure, the second adhesive having the greater loss coefficient than the first adhesive, i.e., having the superior vibration-reduction effects, is selectively applied to the appropriate portion of the peripheral edge portion of the window frame member, which greatly contributes to reduction of the vibration transmitted from the vehicle lower part. Specifically, the second adhesive adheres the window member to the window frame member at the pair of first portions which include the right-and-left corner portions positioned at the lower side of the peripheral edge portion and at the both sides, in the vehicle width direction, thereof and the respective portions continuous to the pair of corner portions and/or the second portion which is positioned between the pair of first portions. Thereby, the vibration-reduction effects can be improved effectively. Meanwhile, the first adhesive is cheaper than the second adhesive. Therefore, since the first adhesive adheres the window member to the window frame member at the other area of the peripheral edge portion of the window frame member than the area where the second adhesive is applied, it is advantageous in costs compared to a case where the second adhesive is applied to an entire periphery of the peripheral edge portion of the window frame member. Accordingly, the superior vibration-reduction effects can be obtained without applying the expensive second adhesive to the entire periphery of the peripheral edge portion of the window frame member.

In the above-described window structure of the vehicle, it is preferable that a width of the second adhesive is greater than that of the first adhesive, wherein a width of an adhesive is defined as a dimension in a direction planar to the peripheral edge portion and perpendicular to a circumferential direction of the peripheral edge portion.

According to this structure, since the second adhesive having the greater loss coefficient than the first adhesive has the greater width, the storage modulus of the entire application area of the second adhesive so increases that the vibration-reduction effects can be further improved.

In the above-described window structure of the vehicle, it is preferable that the second adhesive is applied only to the pair of first portions.

According to this structure, since the second adhesive having the superior vibration-reduction effects is selectively applied only to the pair of first portions having the higher contribution to the vibration reduction, i.e., to the portion of the window frame member where there occurs nodes of the membrane (film) vibration of the window member, suppressing the excessive cost increase and obtaining the superior vibration-reduction effects can be compatibly attained by using the fewer amount of second adhesive.

In the above-described window structure of the vehicle, it is preferable that the second adhesive is applied only to the second portion.

According to this structure, since the second adhesive having the superior vibration-reduction effects is selectively applied only to the second portion having the higher contribution to the vibration reduction, i.e., to the portion of the window frame member where there occurs antinodes of the membrane (film) vibration of the window member, suppressing the excessive cost increase and obtaining the superior vibration-reduction effects can be compatibly attained by using the fewer amount of second adhesive. Moreover, it is easier to apply the second adhesive to the second portion than to the first portion.

In the above-described window structure of the vehicle, it is preferable that the second adhesive is applied to both of the pair of first portions and the second portion.

According to this structure, since the second adhesive having the superior vibration-reduction effects is applied to both of the pair of first portions and the second portion which have the higher contribution to the vibration reduction, i.e., to the portions of the window frame member where there occur the nodes and antinodes of the membrane (film) vibration of the window member, suppressing the excessive cost increase and obtaining the superior vibration-reduction effects can be compatibly attained by using the fewer amount of second adhesive. Moreover, the more-superior vibration-reduction effects can be obtained compared to the cases where it is applied only to the pair of first portions or the second portion.

In the above-described window structure of the vehicle, it is preferable that the second adhesive has a storage modulus of 10 - 25MPa.

According to this structure, the preferably-superior vibration-reduction effects can be obtained.

In the above-described window structure of the vehicle, it is preferable that the first adhesive and the second adhesive are applied such that an end portion of an application area of the first adhesive and an end portion of an application area of the second adhesive overlap each other partially.

According to this structure, the sealing performance at a boundary area between the first adhesive and the second adhesive can be improved.

As described above, the window structure of the vehicle of the present invention can properly suppress the vibration of the window member, preventing the costs from increasing excessively.

The present invention will become apparent from the following description which refers to the accompanying drawings.

### BRIEF DESCRIPTION OF THE DRAWINGS

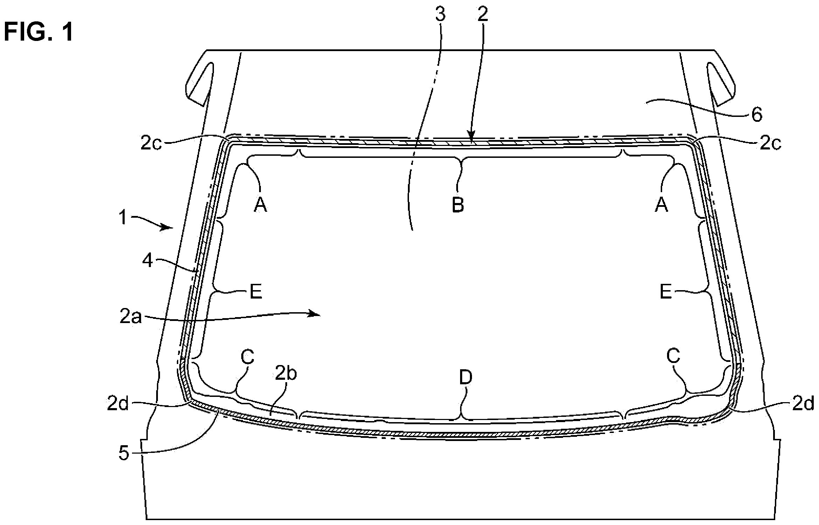

FIG. 1 is an elevational view showing a window frame member and its surrounding area, which shows an entire structure of a window structure of a vehicle according to an embodiment of the present invention.

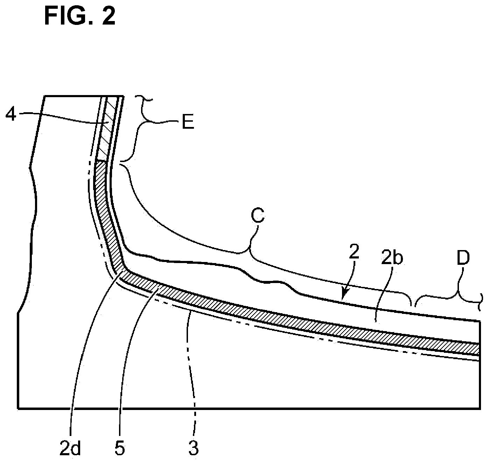

FIG. 2 is an enlarged view of a first portion including a corner portion positioned at a lower left side of a peripheral edge portion of FIG. 1 and its surrounding area.

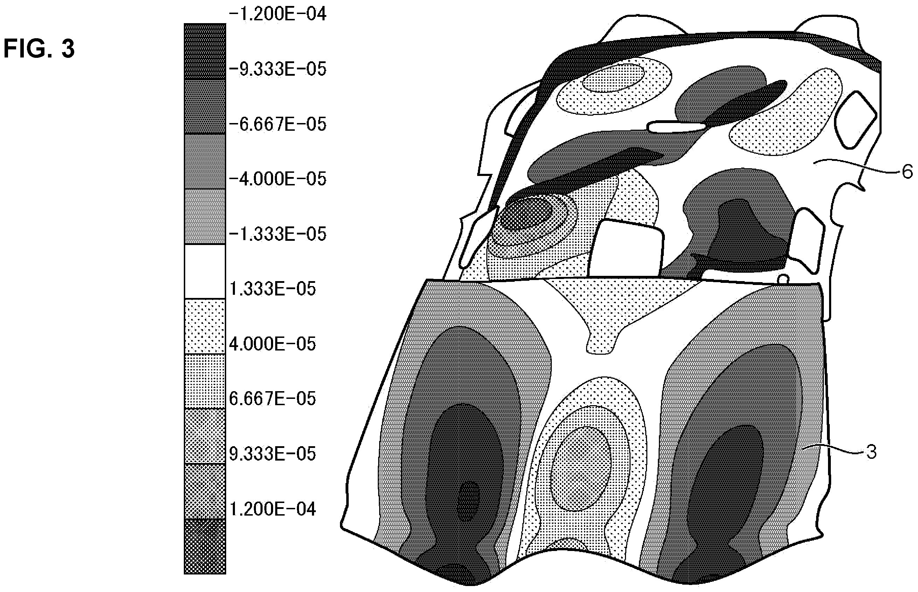

FIG. 3 is a three-dimensional map showing a displacement amount (vibration mode) caused by the membrane (film) vibration of a front windshield of FIG. 1 and a top ceiling.

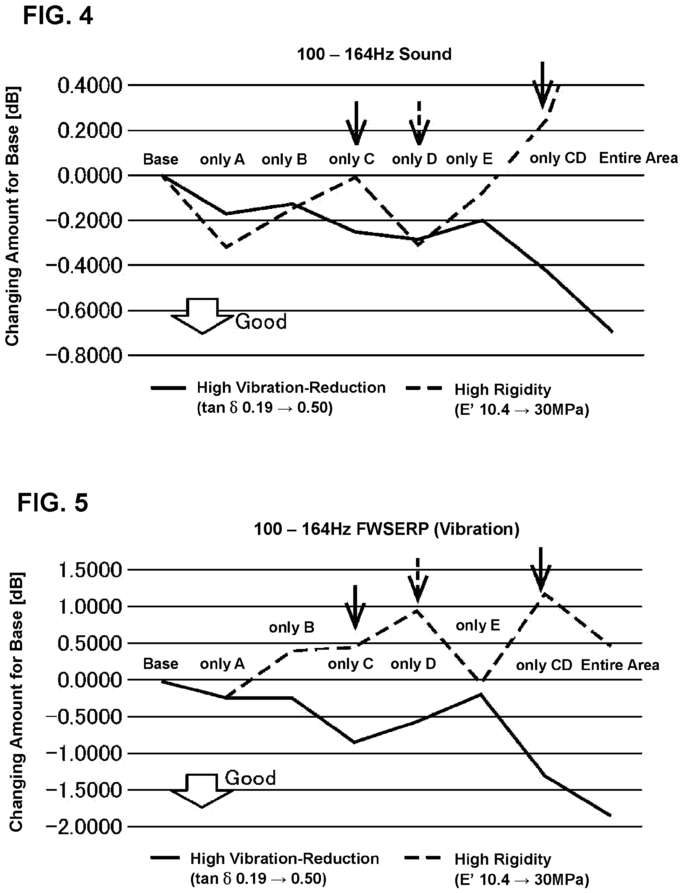

FIG. 4 is a graph showing a changing amount of sound for a base (standard) in two cases where an adhesive applied to the respective portions of a peripheral edge portion of FIG. 1 is constituted by the one having the high vibration-reduction performance and constituted by the one having the high rigidity performance.
FIG. 5 is a graph showing a changing amount of vibration for a base (standard) in two cases where the adhesive applied to the respective portions of the peripheral edge portion of FIG. 1 is constituted by the one having the high vibration-reduction performance and constituted by the one having the high rigidity performance.

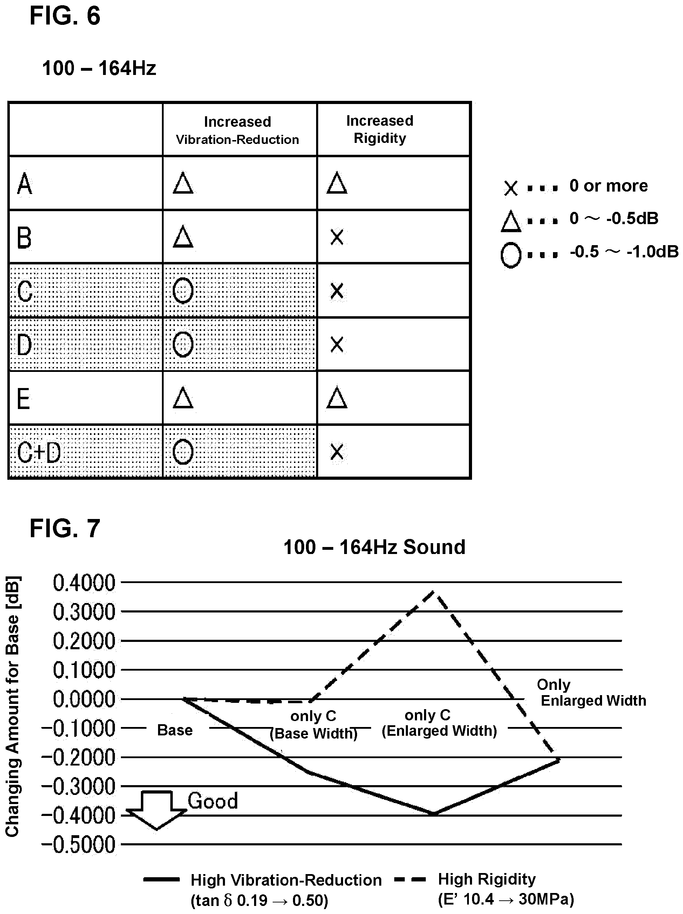

FIG. 6 is a chart showing test results of the vibration reduction for the base (standard) in the respective cases where the adhesive applied to the respective portions of the peripheral edge portion of FIG. 1 is constituted by the one having the high vibration-reduction performance and constituted by the one having the high rigidity performance.
FIG. 7 is a graph showing a changing amount of the sound for a base (standard) in two cases where the adhesive applied to a first portion of the peripheral edge portion of FIG. 1 is constituted by the one having the high vibration-reduction performance and constituted by the one having an enlarged width (large width).

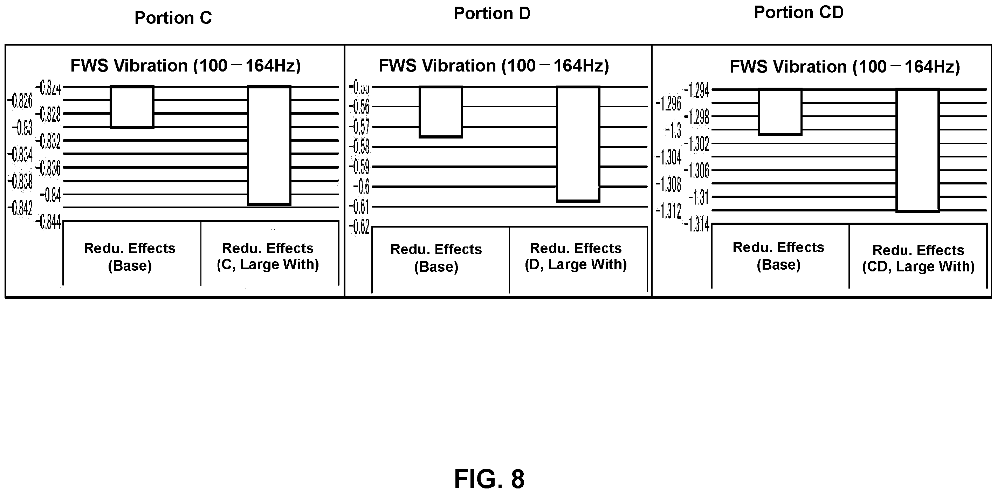

FIG. 8 is a graph showing a reduction amount of the vibration in respective cases where the adhesive applied to either one of the first portion and the second portion or the both portions of the peripheral edge portion of FIG. 1 is constituted only by the one having the high vibration-reduction performance and constituted by both of the one having the high vibration-reduction performance and the one having the enlarged width (large width).

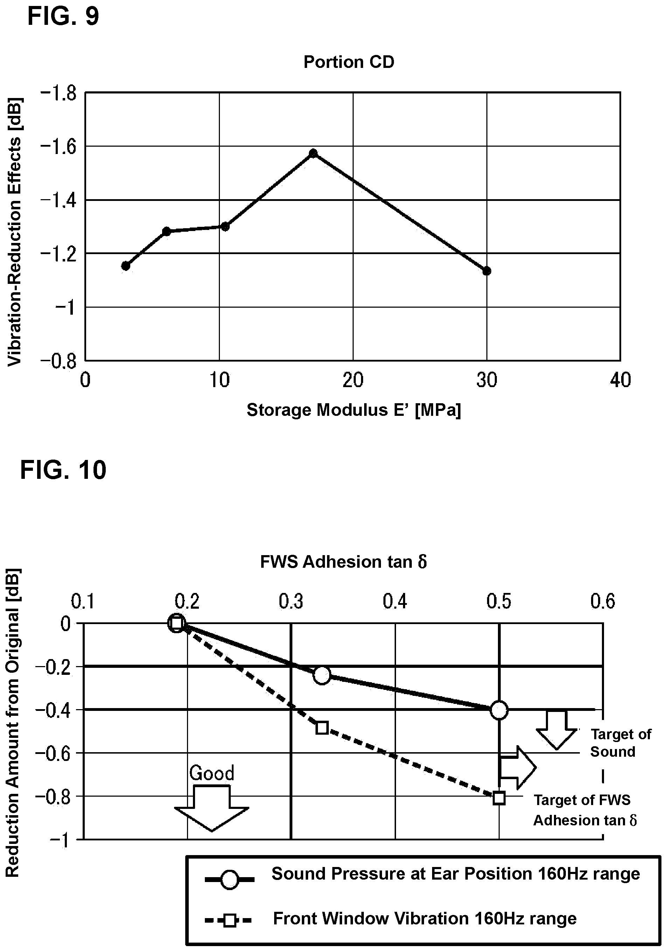

FIG. 9 is a graph showing a relationship between a storage modulus of the adhesive applied to the first portion and the second portion of the peripheral edge portion of FIG. 1 and its vibration-reduction amount as the vibration-reduction effects.
FIG. 10 is a graph showing a relationship between a loss coefficient of an adhesive of the front windshield and its reduction amount from an original model in a case where a sound pressure at an ear position is 160Hz range and in a reference case where front window's vibration is a 160Hz range.

### DETAILED DESCRIPTION OF THE INVENTION

Hereafter, a window structure of a vehicle according to an embodiment of the present invention will be described specifically referring to the drawings.

As shown in FIG. 1, a vehicle body 1 to which the window structure of the vehicle according to the embodiment of the present invention is applied comprises a window frame member 2 provided at a front part of the vehicle, a front windshield 3 (hereafter, referred to as the windshield 3) as a window member attached to the window frame member 2, and two kinds of adhesives to adhere the windshield 3 to the window frame member 2, i.e., a first adhesive 4 and a second adhesive 5. Herein, reference character 6 denotes a top ceiling as a top plate which extends vehicle rearward continuously from the window frame member 2 and covers over an upper face of the vehicle body 1.

The window frame member 2 comprises a roughly rectangular-shaped opening portion 2a which penetrates the window frame member 2 in a vehicle longitudinal direction and a roughly rectangular-shaped peripheral edge portion 2b which is provided to enclose a periphery of the opening portion 2a.

The peripheral edge portion 2b comprises a pair of right-and-left corner portions 2d (lower corner portions 2d) which are positioned at a lower side and at the both sides, in a vehicle width direction, of the peripheral edge portion 2b and a pair of corner portions 2c (upper corner portions 2c) which are positioned at an upper side and at the both sides, in the vehicle width direction, of the peripheral edge portion 2b.

More specifically, the peripheral edge portion 2b comprises a pair of upper corner portions (parts) A which include the pair of upper corner portions 2c, an upper side portion (part) B which is positioned between the pair of upper corner portions (parts) A, a pair of first portions (parts) C which correspond to the pair of lower corner portions 2d, a second portion (part) D which is positioned between the pair of first portions (parts) C as a portion corresponding to the lower side portion, and a pair of side portions (parts) E which are positioned at the both sides, in the vehicle width direction, thereof.

As shown in FIG. 2, each of the pair of first portions C (lower corner portions) specifically includes the corner portion 2d and a portion continuous from the corner portion 2d, and also specifically includes the corner portion 2d and a portion extending upward from the corner portion 2d and a portion extending toward a central side, in the vehicle width direction, thereof. Further, in a case where the corner portion 2d has curvature, it can be said that the first portion C includes a portion which extends from a bending-starting point of the corner portion 2d to a bending-ending point of the corner portion 2d.

The second portion D (lower side portion) is, as shown in FIG. 1, positioned between the pair of first portions C, and specifically between both portions which extend toward a central side, in the vehicle width direction, of the window frame member 2 from the respective first portions C.

The windshield 3 is a roughly rectangular-shaped window member which is provided to cover over the opening portion 2a and overlap the peripheral edge portion 2b, which is configured to be transparent or translucent.

The adhesive is applied to the periphery of the peripheral edge portion 2b, and adheres the front windshield 3 to the peripheral edge portion 2b of the window frame member 2. Specifically, the adhesive comprises the first adhesive 4 and the second adhesive 5 which has a greater loss coefficient than the first adhesive 4. The second adhesive 5 is a so-called high vibration-reduction adhesive, and specifically, it is preferable that its loss coefficient is 1.5 times or more as much as that of the first adhesive 4. The first adhesive 4 is cheaper than the second adhesive 5 having the greater loss coefficient.

More specifically, in a case where the loss coefficient of the first adhesive 4 is about 0.19, it is enough that the loss coefficient of the second adhesive 5 is 0.3 or greater at 20°C, 100Hz (its loss coefficient is 1.5 times or more as much as that of the first adhesive 4).

The above-described loss coefficient of the second adhesive 5 is set based on consideration by using FIG. 10.

FIG. 10 shows a graph showing a relationship between the loss coefficient (FWS adhesion tan δ) of the adhesive of the front windshield (the windshield 3 of the present embodiment) and its reduction amount from an original model (model to which a normal adhesive with the loss coefficient of 0.19 is applied) in a case where a sound pressure at an ear position is at a 160Hz range (solid-line graph in FIG. 10) and in a reference case where front window's vibration is at a 160Hz range (broken-line graph in FIG. 10).

The case where the sound pressure at the ear position is at the 160Hz range in FIG. 10 (the solid-line graph in FIG. 10) shows test results when the reduction coefficient of the adhesive applied around the entire periphery of the windshield 3 is changed. The results have the same tendency as a case where the adhesive is applied only to the first portion C and the second portion D, so that there is a tendency that the reduction ratio (the reduction amount shown at a vertical axis of FIG. 10) decreases linearly as the reduction coefficient (the loss coefficient shown at a horizontal axis of FIG. 10) increases.

The reduction ratio of -0.2dB is the minimum level where a passenger of the vehicle can recognize reduction of road noises. In the case where the sound pressure at the ear position is at the 160Hz range in FIG. 10 (the solid-line graph), if the loss coefficient is 0.3 or more, the reduction ratio is -0.2dB or less. Preferably, if the loss coefficient is 0.4 or more, the reduction ratio is -0.4dB or less.

The second adhesive 5 adheres the front windshield 3 to the window frame member 2 at the pair of first portions C and/or the second portion D of the peripheral edge portion 2b.

In the present embodiment, the second adhesive 5 is applied to both of the pair of first portions C and the second portion D. Herein, the second adhesive 5 may be applied only to either one of the pair of first portions C and the second portion D.

The first adhesive 4 adheres the front windshield 3 to the window frame member 2 at the portion except the above-described portion where the front windshield 3 is adhered to the window frame member 2 by the second adhesive 5.

In the present embodiment, the first adhesive 4 is applied to the portion except the pair of first portions C (lower corner portions) and the second portion D (lower side portion), i.e., the pair of upper corner portions A, the upper side portion B, and the pair of side portions E.

In the present embodiment, the first adhesive 4 and the second adhesive 5 are applied such that an end portion of an application area of the first adhesive 4 and an end portion of an application area of the second adhesive 5 are continuous to each other at their end faces. Accordingly, the respective application areas of the first adhesive 4 and the second adhesive 5 become continuous, thereby securing the sealing performance.

It is preferable that the storage modulus E' of the second adhesive 5 is 10 - 25MPa for obtaining the superior vibration-reduction effects. Its basis is apparent from the graph of FIG. 9. FIG. 9 shows a graph showing a relationship between a storage modulus E' of the adhesive applied to the first portion C and the second portion D of the peripheral edge portion 2b of FIG. 1 and its vibration-reduction amount as the vibration-reduction effects. It is apparent from FIG. 9 that the vibration-reduction effects of - 1.3dB or more can be obtained in a range of 10 - 25MPa of the storage modulus E'. Preferably, in a range of 12.5 - 22MPa of the storage modulus E', the vibration-reduction effects of -1.4dB or more can be obtained. Further preferably, in a range of 15 - 20MPa of the storage modulus E', the vibration-reduction effects of -1.5dB or more can be obtained. Herein, the above-described values of the storage modulus E' are the ones at 20°C, 100Hz.

### (Membrane (Film) Vibration)

FIG. 3 shows a three-dimensional map showing a displacement amount (vibration mode) caused by the membrane (film) vibration of the front windshield 3 and the top ceiling 6 as vibration modes when the vibration of 140Hz, one example of the vibration in the vehicle traveling, is inputted. The displacement amount is indicated by the dot-density of the upper displacement amount of 1.333E-05 - 1.200E-04 and the shading of the lower displacement amount of -1.333E-05 - -1.200E-04.

It can be understood from the three-dimensional map of FIG. 3 that there occurs the membrane (film) vibration of the windshield 3 of the vehicle which is caused by the vehicle traveling's vibrations transmitted to the windshield 3 from the vehicle lower part and also the top ceiling 6 located above the windshield 3 has the membrane (film) vibration accordingly.

Especially, it is apparent from viewing the lower side of the windshield 3 that nodes are generated at the both-side lower corner portions and also an antinode of upward displacement is generated at the central portion of the lower side and a pair of antinodes of downward displacement are generated on both sides of the antinode of upward displacement.

Therefore, it can be recognized that by adhering at least one of the both-side lower corner portions where the nodes of the membrane (film) vibration of the windshield 3 are generated and the lower side portion where the antinode is generated, preferably the both portions, to the windshield 3 by the adhesive having the superior vibration-reduction effects (the so-called high vibration-reduction adhesive), the vibration-reduction effects are effectively improved by the fewer amount of high vibration-reduction adhesive.

Accordingly, since the second portion D of the lower side portion of the window frame member 2 of FIG. 1 becomes the portion where the antinode of the vibration of the windshield 3 is generated, the strain energy is accumulated at the second adhesive 5 by applying the second adhesive 5 as the high vibration-reduction adhesive. Further, since the pair of first portions C of the lower corner portions of the window frame member 2 of FIG. 1 become move-starting points (nodes) of the second portion D of the lower side portion, the strain energy is accumulated at the second adhesive 5 by applying the second adhesive 5 to the first portions C, so that the vibration-reduction effects are improved.

On the contrary, in a case where the high-rigidity adhesive is applied to the first portions C and/or the second portion D as a comparative example, it may be considered that the vibration of the second portion D increases. Further, in a case where the two-line adhesive portion is formed at the lower side portion which corresponds to the second portion D for the high rigidity, it may be considered as well that the vibration of the lower side portion (the second portion D) increases.

Next, a range for the high (superior) reduction which can effectively attain the superior reduction of the sound and vibration at the peripheral edge portion 2b of the window frame member 2 will be considered comparing to a range for the high rigidity of a comparative example.

### (Consideration of Range for High Reduction)

First, referring to FIGS. 4 and 5, respective changing amounts of the sound and vibration in two cases where the adhesive applied to the respective portions A - E of the peripheral edge portion 2b is constituted by the one having the high vibration-reduction performance and constituted by the one having the high rigidity performance when the vibration (100 - 164Hz) in the vehicle traveling is applied to the windshield 3 are examined. Herein, the vibration of the windshield 3 is examined.

FIG. 4 is a graph showing the changing amount of the sound for a base (standard) (i.e., a basic adhesive without the high vibration-reduction performance nor the high rigidity performance (a normal one with the loss coefficient tan δ 0.19)). FIG. 5 is a graph showing the changing amount of the vibration for the base.

As shown in FIGS. 4 and 5, in the case where the adhesive applied to the respective portions A - E of the peripheral edge portion 2b is constituted by the one having the high vibration-reduction performance (the loss coefficient tan δ 0.19 → 0.50) (see the solid line-graphs of FIGS. 4 and 5), the respective changing amounts of the sound and vibration for the base decrease for the base. Further, the above-described changing amounts decrease the most in the case where the adhesive applied only to the first portion C and the second portion D is constituted by the one having the high vibration-reduction performance, and its decreasing becomes near the changing amount of the comparative example where the adhesive applied to the respective portions A - E is constituted by the one having the high vibration-reduction performance. Further, it is apparent that the changing amounts of the sound and vibration in the case where the adhesive applied only to the first portion C is constituted by the one having the high vibration-reduction performance decrease, and the changing amounts of the sound and vibration in the case where the adhesive applied only to the second portion D is constituted by the one having the high vibration-reduction performance decrease more. Particularly, it is apparent from the graph of FIG. 5 that there occurs the decrease of 0.5dB or more in the respective cases of the applications only to the first portion C, only to the second portion D, and only to the first and second portions C and D. As described above, the reduction effects of the sound and vibration can be securely obtained regardless of the frequency of the input vibration by using the adhesive having the high vibration-reduction performance.

Meanwhile, it can be understood that in the case of the comparative example where the adhesive applied to the respective portions A - E of the peripheral edge portion 2b is constituted by the one having the high rigidity performance (the storage modulus E' 10.4 -> 30MPa) (see the broken-line graphs of FIGS. 4 and 5), the cases where the adhesive applied only to the first and second portions C and D is constituted by the one having the high rigidity performance show the largest changing amount of the sound and vibration, so that there occurs no reduction effect of the sound and vibration. Further, in the case where the adhesive applied only to the second portion D is constituted by the one having the high rigidity performance, the changing amount of the sound in FIG. 4 becomes small but the changing amount of the vibration in FIG. 5 becomes larger than the base, so that the vibration-reduction effect is not obtained. Moreover, in the case where the adhesive applied only to the first portion C is constituted by the one having the high rigidity performance, the both changing amounts of the sound and vibration in FIGS. 4 and 5 become large, so that the reduction effects of the sound and vibration are not obtained. Thus, it is apparent that the reduction effects of the sound and vibration are not obtained sufficiently by using the adhesive having the high rigidity performance.

As shown by a chart of FIG. 6, test results of the vibration reduction for the base can be obtained from the above-described changing amounts of the vibration shown by the graphs of FIG. 5 in the respective cases where the adhesive applied to the portions A - E of the peripheral edge portion 2b is constituted by the one having the high vibration-reduction performance (the increased vibration reduction in FIG. 6) and constituted by the one having the high rigidity performance (the increased rigidity in FIG. 6).

According to the chart shown in FIG. 6, it is recognized that the superior (high) vibration-reduction effects of -0.5dB or more can be obtained by the increased vibration reduction of either one of the first portion C and the second portion D or the both. Meanwhile, it is understood that in a case where the rigidity is increased for either one of the first portion C and the second portion D or the both, the changing amount becomes 0dB or more, so that the vibration increases improperly.

### (Verification of Reduction Effects by Adhesive Having Enlarged Width)

Next, the reduction effects by the adhesive having an enlarged width (large width) will be verified referring to FIGS. 7 and 8.

FIG. 7 is a graph showing the changing amount of the sound for the base in the two cases where the adhesive applied to the first portion C of the peripheral edge portion 2b of FIG. 1 is constituted by the one having the high vibration-reduction performance and constituted by the one having the enlarged width (large width).

It is apparent from FIG. 7 that in the case where the adhesive having the high vibration-reduction performance is applied to the first portion C (lower corner portion) of the peripheral edge portion 2b (see the solid-line graph of FIG. 7), the changing amount (-0.4dB) of the sound in the case of the width (e.g., 1.5-time enlarged width) decreases about double compared to that (-0.2dB) in the case of the base width, so that the enlarged width of the adhesive having the high vibration-reduction performance improves the reduction of the sound. Meanwhile, it can be understood that in the case of the comparative example where the adhesive applied to the first portion C (lower corner portion) of the peripheral edge portion 2b is constituted by the one having the high rigidity performance (see the broken-line graph of FIG. 7), the sound in the case of the enlarged width increases up to around 0.38dB, so that the enlarged width of the adhesive having the high rigidity performance does not reduce the sound but increases the sound instead.

FIG. 8 is a graph showing the reduction amount of the vibration in respective cases where the adhesive applied to either one of the first portion C and the second portion D or the both portions C, D of the peripheral edge portion 2b of FIG. 1 (the portion C, the portion D, and the portions C and D in FIG. 8) is constituted only by the one having the high vibration-reduction performance and constituted by both of the one having the high vibration-reduction performance and the one having the enlarged width. Herein, in FIG. 8, the input vibration (FWS vibration) to the windshield 3 is set at 100 - 164Hz.

It is apparent from FIG. 8 that in the case where the adhesive applied to either one of the first portion C and the second portion D or the both portions C, D is constituted by both of the one having the high vibration-reduction performance and the one having the enlarged width, the changing amount of the vibration considerably decreases compared to the case where only the adhesive having the high vibration-reduction performance is used.

### (Features of Present Embodiment)

(1) In the above-described window structure of the vehicle of the present embodiment, the second adhesive 5 having the greater loss coefficient than the first adhesive 4, i.e., having the superior vibration-reduction effects, is selectively applied to the appropriate portion of the peripheral edge portion 2b of the window frame member 2, which greatly contributes to reducing of the vibration transmitted from the vehicle lower part. Specifically, the second adhesive 5 adheres the front windshield 3 to the window frame member 2 at the pair of first portions (parts) C which include the right-and-left corner portions 2d positioned at the lower side of the opening portion 2a of the window frame member 2 and at the both sides, in the vehicle width direction, thereof and the respective portions continuous to the pair of corner portions 2d and/or the second portion (part) D which is positioned between the pair of first portions (parts) C. Thereby, the vibration-reduction effects can be improved effectively.
   Meanwhile, the first adhesive 4 is cheaper than the second adhesive 5. Therefore, since the first adhesive 4 adheres the front windshield 3 to the window frame member 2 at the other area of the peripheral edge portion 2b of the window frame member 2 than the area where the second adhesive 5 is applied, it is advantageous in costs compared to a case where the second adhesive 5 is applied to an entire periphery of the peripheral edge portion 2b of the window frame member 2.
   Accordingly, the superior vibration-reduction effects can be obtained without applying the expensive second adhesive 5 to the entire periphery of the peripheral edge portion 2b of the window frame member 2.
(2) In the present embodiment, it is preferable that the width of the second adhesive 5 is greater than that of the first adhesive 4. Since the second adhesive 5 having the greater loss coefficient than the first adhesive 4 has the greater width, the storage modulus E' of the entire application area of the second adhesive 5 so increases that the vibration-reduction effects can be further improved.
(3) In the present embodiment, the second adhesive 5 is applied to both of the pair of first portions C and the second portion D. According to this structure, since the second adhesive 5 having the superior vibration-reduction effects is applied to both of the pair of first portions C and the second portion D which have the higher contribution to the vibration reduction, i.e., to the portions of the windshield 3 where there occur the nodes and antinodes of the membrane (film) vibration of the windshield 3, suppressing the excessive cost increase and obtaining the superior vibration-reduction effects can be compatibly attained by using the fewer amount of second adhesive 5. Moreover, the more-superior vibration-reduction effects can be obtained compared to the cases where it is applied only to the pair of first portions C or the second portion D.
(4) Herein, the second adhesive 5 may be applied only to the pair of first portions C. According to this structure, since the second adhesive 5 having the superior vibration-reduction effects is selectively applied only to the pair of first portions C having the higher contribution to the vibration reduction, i.e., to the portion of the windshield 3 where there occurs nodes of the membrane (film) vibration of the windshield 3, suppressing the excessive cost increase and obtaining the superior vibration-reduction effects can be compatibly attained by using the fewer amount of second adhesive 5.
(5) Further, the second adhesive 5 may be applied only to the second portion D. According to this structure, since the second adhesive 5 having the superior vibration-reduction effects is selectively applied only to the second portion D having the higher contribution to the vibration reduction, i.e., to the portion of the windshield 3 where there occurs antinodes of the membrane (film) vibration of the windshield 3, suppressing the excessive cost increase and obtaining the superior vibration-reduction effects can be compatibly attained by using the fewer amount of second adhesive 5. Moreover, it is easier to apply the second adhesive 5 to the second portion D than to the first portion C.
(6) In the present embodiment, the second adhesive 5 has the storage modulus E' of 10 - 25MPa. According to this structure, the preferably-superior vibration-reduction effects can be obtained.

### (Modified Example)

In the above-described embodiment, while the first adhesive 4 and the second adhesive 5 are applied such that an end portion of an application area of the first adhesive 4 and an end portion of an application area of the second adhesive 5 are continuous to each other at their end faces, the present invention is not limited to this.

As a modified example, the first adhesive 4 and the second adhesive 5 may be applied such that the end portion of the application area of the first adhesive 4 and the end portion of the application area of the second adhesive 5 overlap each other partially. According to this structure, since the respective application areas of the first adhesive 4 and the second adhesive 5 are continuous seamlessly, the sealing performance at a boundary area between the first adhesive 4 and the second adhesive 5 can be improved.

## Claims

1. A window structure of a vehicle, comprising:
a window frame member (2) having an opening portion (2a) penetrating in a vehicle longitudinal direction and a peripheral edge portion (2b) enclosing the opening portion (2a) and provided at a front part of the vehicle;
a window member (3) covering the opening portion (2a) and piled on the peripheral edge portion (2b) of the window frame member (2), the window member (3) being transparent or translucent; and
an adhesive applied to the peripheral edge portion (2b) of the window frame member (2) along an entire circumference of the peripheral edge portion (2b) so as to adhere the window member (3) to the peripheral edge portion (2b) of the window frame member (3),
wherein the peripheral edge portion (2b) of the window frame member (3) comprises a pair of first portions (C) which include a pair of right-and-left corner portions (2d) positioned at a lower side of the peripheral edge portion (2b) and at both sides, in a vehicle width direction, of the peripheral edge portion (2b); respective portions continuous to the pair of right-and-left corner portions (2d); and a second portion (D) which is positioned between the pair of first portions (C),
the adhesive comprises a first adhesive (4) and a second adhesive (5) having a greater loss coefficient than the first adhesive (4),
the second adhesive (5) is provided to adhere the window member (3) to the window frame member (2)
at the pair of first portions (C) and/or the second portion (D) or
at one of the first portions (C) and the second portion (D), and
the first adhesive (4) is provided to adhere the window member (3) to the window frame member (2) at a portion (A, B, E) except the portions (C, D) where the window member (3) is adhered to the window frame member (2) by the second adhesive (5).

2. The window structure of the vehicle of claim 1, wherein a width of the second adhesive (5) is greater than that of the first adhesive (4).

3. The window structure of the vehicle of claim 1 or 2, wherein the second adhesive (5) is applied only to the pair of first portions (C).

4. The window structure of the vehicle of claim 1 or 2, wherein the second adhesive (5) is applied only to the second portion (D).

5. The window structure of the vehicle of claim 1 or 2, wherein the second adhesive (5) is applied to both of the pair of first portions (C) and the second portion (D).

6. The window structure of the vehicle of claim 1 or 2, wherein the second adhesive (5) is applied only to the second portion (D) and one of the first portions (C).

7. The window structure of the vehicle according to any one of the preceding claims, wherein the second adhesive (5) has a storage modulus of 10.0 MPa - 25.0 MPa.

8. The window structure of the vehicle according to any one of the preceding claims, wherein the first adhesive (4) and the second adhesive (5) are applied such that an end portion of an application area of the first adhesive (4) and an end portion of an application area of the second adhesive (5) overlap each other partially.

9. The window structure of the vehicle according to any one of the preceding claims, wherein a loss coefficient of the second adhesive (5) is at least 1.5 times of a loss coefficient of the first adhesive (4).

10. The window structure of the vehicle according to any one of the preceding claims, wherein the first adhesive (4) has a loss coefficient of 0.19.

11. The window structure of the vehicle according to any one of the preceding claims, wherein the second adhesive (5) has a loss coefficient of 0.30 or more.

12. The window structure of the vehicle according to any one of the preceding claims, wherein the second adhesive (5) has a storage modulus of 12.5 MPa - 22.0 MPa.

13. The window structure of the vehicle according to any one of the preceding claims, wherein the second adhesive (5) has a storage modulus of 15.0 MPa - 20.0 MPa.
